# FASCICULE DE BREVET EUROPEEN

(11) **EP 2 209 676 B1**
(45) Date de publication et mention de la délivrance du brevet: **21.01.2015**
(21) Numéro de dépôt: 08842729.9
(22) Date de dépôt: 02.10.2008
(51) Int. Cl.: B60S 1/38

(54) **EMBOUT D'EXTREMITE POUR BALAI D'ESSUIE-GLACE**
ENDSTÜCK FÜR EIN WISCHERBLATT
END FITTING FOR A WIPER BLADE

(30) Priorité: 22.10.2007 FR 0707363
(43) Date de publication de la demande: 28.07.2010
(73) Titulaire: Valeo Systèmes d'Essuyage, 78321 La Verrière (FR)
(72) Inventeur: BOUSSET, Xavier, F-63115 Mezel (FR)
(74) Mandataire: Léveillé, Christophe
(86) Numéro de dépôt international: PCT/EP2008/063234
(87) Numéro de publication internationale: WO 2009/053229

(56) Documents cités:
- DE-U1-202004 012 109
- FR-A- 2 868 748
- US-A- 5 493 750
- US-A1- 2004 200 026
- US-A1- 2007 061 993

## Description

L'invention propose un embout d'extrémité pour balai d'essuie-glace qui est apte à être monté sur l'une ou l'autre des extrémités du balai.

Le document US2007061993 A1 décrit un embout selon le préambule de la revendication 1.

L'invention propose plus particulièrement un embout d'extrémité pour un balai d'essuie-glace d'orientation principale longitudinale, comportant une vertèbre de rigidification, une lame d'essuyage, et une monture de support de la vertèbre et de la lame, l'embout étant apte à être monté sur une extrémité longitudinale du balai, l'embout comportant un logement longitudinal ouvert en direction d'une première extrémité longitudinale de l'embout, dans lequel une extrémité longitudinale de la vertèbre est apte à être reçue, et comportant des moyens pour verrouiller l'extrémité de la vertèbre en position engagée dans le logement longitudinal qui sont aptes à coopérer avec une encoche réalisée dans un bord longitudinal de l'extrémité de la vertèbre.

La vertèbre de rigidification, la lame d'essuyage et la monture de support du balai sont des composants du balai qui sont d'orientation principale longitudinale. La vertèbre et la lame sont introduites en coulissement longitudinal dans des conduits longitudinaux complémentaires de la monture.

Le blocage longitudinal de la vertèbre et de la lame dans les conduits de la monture est réalisé par des embouts d'extrémités montés sur chaque extrémité du balai.

Chaque embout est réalisé de manière à être verrouillé sur l'extrémité associée de la vertèbre et de manière à former une butée longitudinale des extrémités associées de la monture et de la lame.

De manière conventionnelle, le verrouillage de l'embout en position engagée sur la vertèbre est réalisé par l'intermédiaire d'une encoche réalisée dans un bord longitudinal de la vertèbre, recevant un organe de verrouillage associé.

Les deux extrémités de la vertèbre comportent chacune une encoche, et les deux encoches sont réalisées dans un même bord longitudinal de la vertèbre.

Ainsi, il est connu de réaliser chaque embout en fonction de l'extrémité du balai sur laquelle l'embout est destiné à être monté.

De ce fait, les deux embouts qui doivent être montés sur un balai sont différents, ce qui pose les problèmes d'augmentation du nombre d'appareillages utilisés pour réaliser les composants du balai.

L'invention a pour but de propose un embout d'extrémité réalisé de manière qu'il est apte à être monté indifféremment sur l'une ou l'autre des deux extrémités de la vertèbre.

Dans ce but, l'invention propose un embout d'extrémité tel que décrit précédemment, caractérisé en ce que les moyens de verrouillage sont réalisés de manière symétrique par rapport à un plan longitudinal vertical médian du logement longitudinal.

Selon d'autres caractéristiques de l'embout selon l'invention, prises isolément ou en combinaison :
- l'embout est réalisé de manière symétrique par rapport audit plan longitudinal vertical médian du logement longitudinal ;
- les moyens de verrouillage comportent deux languettes élastiques dont chacune est réalisée dans une paroi du logement longitudinal, en s'étendant longitudinalement en direction de la deuxième extrémité longitudinale de l'embout, et dont l'extrémité longitudinale libre de chaque languette est recourbée vers l'intérieur du logement longitudinal ;
- l'extrémité libre de l'une des deux languettes est apte à être reçue dans l'encoche de l'extrémité longitudinale de la vertèbre, pour le verrouillage de la vertèbre en position dans le logement longitudinal ;
- les moyens de verrouillage sont débrayables, pour permettre un démontage de l'embout d'avec l'extrémité longitudinale du balai ;
- le logement longitudinal est ouvert vers le bas au niveau de chaque languette élastique pour permettre le passage d'un outil apte à provoquer une déformation des languettes ;
- l'embout comporte deux crochets inférieurs répartis symétriquement par rapport audit plan longitudinal vertical de symétrie, qui s'étendent vers le bas depuis un fond du logement longitudinal, et qui délimitent un conduit longitudinal apte à recevoir un dos supérieur de la lame d'essuyage ;
- la deuxième extrémité longitudinale de l'embout comporte une paroi verticale transversale qui obture l'extrémité associée du conduit longitudinal ;
- l'embout comporte un corps creux dans lequel le logement longitudinal est réalisé, et qui comporte un logement qui prolonge le logement longitudinal vers la première extrémité de l'embout et dans lequel une extrémité longitudinale de la monture est apte à être reçue.

L'invention propose aussi un balai d'essuie-glace comportant une monture de support, une vertèbre de rigidification, et une lame d'essuyage, caractérisé en ce que chaque extrémité du balai porte un embout tel que défini précédemment.

Selon d'autres caractéristiques du balai selon l'invention, chaque extrémité longitudinale de la vertèbre comporte une encoche et les encoches sont toutes les deux agencées transversalement d'un même coté par rapport à un plan longitudinal vertical médian de la vertèbre.

D'autres caractéristiques et avantages de l'invention apparaîtront à la lecture de la description détaillée qui suit pour la compréhension de laquelle on se reportera aux figures annexées parmi lesquelles :
- la figure 1 est une représentation schématique en perspective d'un balai d'essuie-glace comportant des embouts selon l'invention ;
- la figure 2 est une vue de dessous partielle du balai représenté à la figure 1, montrant les moyens de verrouillage des embouts et les encoches de la vertèbre ;
- la figure 3 est un détail à plus grande échelle d'un embout seul représenté à la figure 2 ;
- la figure 4 est une représentation schématique en perspective de l'embout représenté à la figure 3 ;
- la figure 5 est une représentation schématique en perspective suivant un autre angle de vue de l'embout selon l'invention représenté aux figures 3 et 4.

Pour la description de l'invention, on adoptera à titre non limitatif les orientations verticale, longitudinale et transversale selon le repère V, L, T indiqué aux figures.

Dans la description qui va suivre, des éléments identiques, similaires ou analogues seront désignés par les mêmes chiffres de référence.

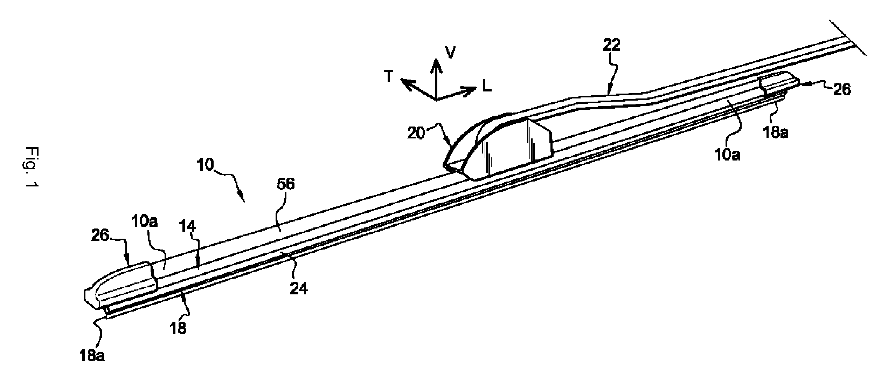

On a représenté à la figure 1 un balai d'essuie-glace 10 pour un panneau vitré d'un véhicule automobile tel qu'un pare-brise avant du véhicule.

Le balai 10 est un balai du type "flat blade", il est ici d'orientation principale longitudinale.

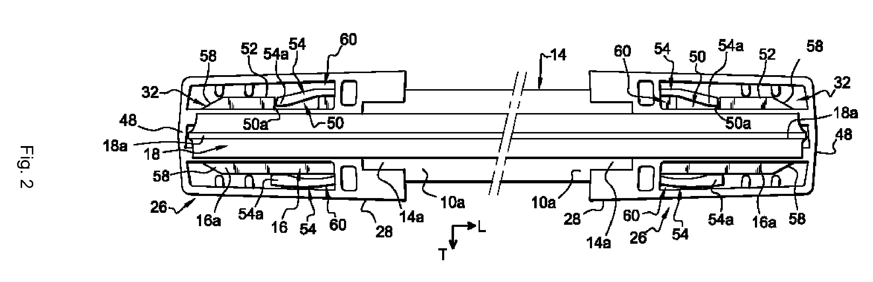

Comme on peut le voir à la figure 2, le balai 10 comporte une monture de support 14 creuse et une vertèbre longitudinale de rigidification 16 agencée dans la monture 14, qui constituent la structure du balai 10 proprement dit.

La monture de support 14 porte aussi un connecteur 20 de montage et d'articulation du balai 10 sur l'extrémité libre d'un bras 22 d'entraînement du balai 10 en mouvement de balayage par rapport au panneau vitré, et elle porte une lame inférieure 18 qui est réalisée en un matériau souple, et qui est apte à venir en contact avec le panneau vitré à essuyer.

La vertèbre de rigidification 16 consiste en une bande métallique horizontale qui est cintrée verticalement, de manière que lorsque le balai 10 est en appui sur le panneau vitré, les efforts d'appui exercés par le bras d'entraînement 22 sont répartis sur toute la longueur de la lame 18.

La monture 14 porte la vertèbre 16 et la lame 18.

A cet effet, la monture 14 est creuse, elle comporte un conduit central (non représenté) longitudinal qui reçoit la vertèbre 16, et elle comporte des crochet inférieurs 24 en vis-à-vis, qui délimitent un conduit inférieur longitudinal ouvert vers le bas, dans lequel un dos supérieur de la lame 18 est reçu.

La vertèbre 16 et la lame 18 sont introduites dans leurs conduits respectifs de la monture 14 selon un mouvement de coulissement longitudinal.

Lorsque la vertèbre 16 et la lame 18 sont en position montées sur la monture 14, leurs extrémités longitudinales 16a, 18a font saillie longitudinalement par rapport à l'extrémité longitudinale associée 14a de la monture 14, comme on peut le voir à la figure 2.

Chaque extrémité 10a du balai 10 porte un embout d'extrémité 26 qui réalise le blocage de la vertèbre 16 et de la lame 18 en coulissement longitudinal par rapport à la monture 14, et qui permet d'améliorer l'aspect esthétique global du balai 10.

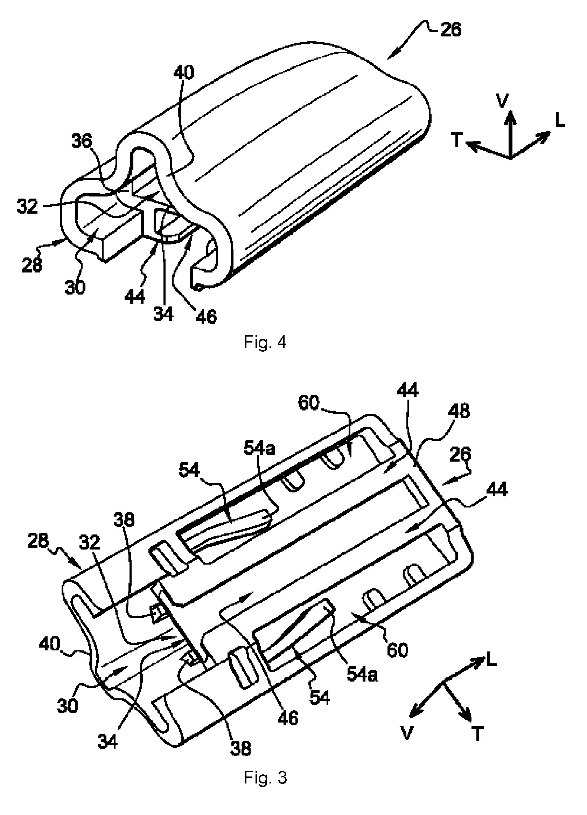

Dans la description d'un embout qui va suivre on adoptera l'orientation d'arrière en avant comme étant la direction longitudinale de gauche à droite en se reportant aux figures 3 et 4. Il sera compris que cette orientation n'est pas limitative, et qu'elle a uniquement pour but de simplifier la compréhension de l'invention.

Comme on peut le voir plus en détails aux figures 3 à 5, chaque embout 26 comporte un corps principal creux 28 qui est ouvert au niveau d'une première extrémité de l'embout, qui est l'extrémité arrière de l'embout 26, et qui est obturé au niveau de la deuxième extrémité de l'embout 26, qui est l'extrémité avant de l'embout 26.

Le corps creux 28 délimite un volume intérieur dans lequel l'extrémité avant 14a de la monture 14 et l'extrémité avant 16a de la vertèbre 16 sont reçues.

L'extrémité arrière du corps creux 28 délimite un logement arrière 30 dans lequel l'extrémité avant 14a de la monture 14 est reçue, et un logement longitudinal 32 qui prolonge le logement arrière vers l'avant, dans lequel l'extrémité avant 18a de la vertèbre 18 est reçue.

La forme du logement arrière 30 et la forme du logement longitudinal 32 sont globalement complémentaires de la forme de l'extrémité avant 14a de la monture et de la forme de l'extrémité avant 16a de la vertèbre 16, respectivement.

Comme on l'a dit plus haut, la vertèbre 16 est un élément globalement horizontal, par conséquent, le logement longitudinal 32 est aussi globalement horizontal.

Pour délimiter le logement longitudinal 32, le corps creux 28 comporte un fond inférieur horizontal 34 et deux parois latérales longitudinales verticales 36 qui s'étendent vers le haut depuis le fond inférieur 34.

Le corps creux 28 comporte aussi deux nervures 38 longitudinales verticales qui s'étendent vers le bas depuis une paroi supérieure 40 du corps creux 28, et dont les bords inférieurs 38a des nervures 38 délimitent la partie supérieure du logement longitudinal 32.

L'extrémité arrière 42 de chaque bord inférieur 38a est en outre chanfreinée, pour faciliter l'introduction de la vertèbre dans le logement longitudinal 32.

Chaque nervure 38 forme une butée longitudinale de l'embout 26 contre l'extrémité avant 14a de la monture 14.

L'embout 26 comporte aussi des crochets longitudinaux 44 qui s'étendent vers le bas depuis le fond 34 du logement longitudinal 32, et qui sont recourbés transversalement vers l'intérieur, de manière à délimiter un logement inférieur 46 dans lequel le dos supérieur de la lame 18 est apte à être reçu.

Enfin, l'embout 26 comporte une paroi verticale transversale avant 48 qui obture l'extrémité avant du logement longitudinal 32 et du logement inférieur 46, de manière à former une butée longitudinale de la vertèbre 16 et de la lame 18.

Ainsi, lorsque les deux embouts sont montés aux deux extrémités 10a du balai 10, ils sont solidaires de la vertèbre 16, et chaque embout forme une butée de la monture 14 et de la lame 18 en coulissement longitudinal vers l'avant ou vers l'arrière, empêchant par conséquent la désolidarisation de la vertèbre 16 et/ou de la lame 18 d'avec la monture 14.

Pour réaliser le blocage de la vertèbre 16 et de la lame 18 par rapport à la monture 14, l'embout 26 comporte des moyens pour le verrouillage de l'extrémité avant 16a de la vertèbre 16 en position engagée dans le logement longitudinal 32.

L'extrémité 16a de la vertèbre 16 comporte une encoche 50 qui est destinée à coopérer avec les moyens de verrouillage de l'embout 26.

Comme on peut le voir à la figure 2, cette encoche 50 est réalisée dans un bord latéral 52 de la vertèbre 16, et s'étend transversalement vers l'intérieur de la vertèbre.

Selon un mode de réalisation préféré, chaque extrémité 16a de la vertèbre 16 comporte une encoche 50, et ces deux encoches 50 sont réalisées dans le même bord latéral 52 de la vertèbre 16, comme on peut le voir à la figure 2.

Les moyens de verrouillage comportent une languette élastique 54 qui s'étend sensiblement longitudinalement vers l'avant et qui est recourbée vers l'intérieur du logement longitudinal 32, de manière que l'extrémité avant libre 54a est apte à être reçue dans l'encoche 50 associée de la vertèbre 16.

La languette 54 est apte à se déformer élastiquement vers l'extérieur du logement longitudinal 32 lors de l'introduction de l'extrémité 16a de la vertèbre 16 dans le logement longitudinal 32, pour cela, l'extrémité libre 54a de la languette 54 s'appuie contre le bord latéral 52 de la vertèbre.

Ensuite, lorsque la vertèbre 16 est en position montée dans le logement longitudinal 32, l'encoche 50 est située au niveau de l'extrémité libre 54a de la languette 54. La languette 54 revient alors élastiquement vers sa configuration initiale, de manière que son extrémité libre 54a est en vis-à-vis d'une face transversale avant 50a de l'encoche 50.

Lorsque la vertèbre 16 a tendance à sortir du logement longitudinal 32, la face avant 50a de l'encoche 50 vient en butée vers l'arrière contre l'extrémité avant libre 54a de la languette 54.

L'embout 26 est réalisé de manière à pouvoir être monté indifféremment sur l'une ou l'autre des extrémités longitudinales 10a du balai 10.

A cet effet, selon l'invention, les moyens de verrouillage sont réalisés de manière symétrique par rapport à un plan longitudinal vertical médian du logement longitudinal 32.

Par conséquent, l'embout 26 comporte deux languettes 54 réparties de part et d'autre dudit plan médian, et l'une des deux languettes 54 est apte à être engagée dans l'encoche 50 associée de l'extrémité 16a de la vertèbre 16 selon que l'embout est monté sur l'extrémité 10a avant ou arrière du balai 10.

Selon un mode de réalisation préféré de l'invention, la totalité de l'embout 26 est symétrique par rapport au plan longitudinal vertical médian du logement longitudinal 32.

La forme du corps creux 28 est ainsi définie pour pouvoir recouvrir chaque extrémité longitudinale 14a de la monture 14, sans limiter l'effet aérodynamique du balai 10.

En effet, comme on peut le voir à la figure 1, la monture 14 comporte, un volet supérieur 56 qui est conformé aérodynamiquement pour que le vent relatif, qui est produit par le déplacement du véhicule, produise un effort tendant à plaquer le balai 10 sur le panneau vitré.

Comme on l'a dit plus haut, le logement arrière 30 du corps creux 28 est apte à recevoir l'extrémité longitudinale 14a de la monture 14.

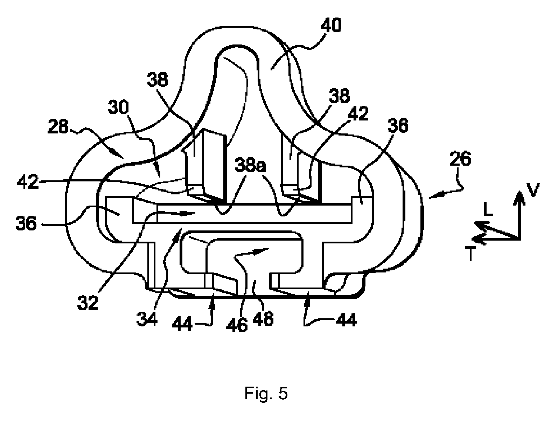

Ainsi, comme on peut le voir à la figure 5, la partie supérieure du logement arrière 30 correspond à une addition du profil du volet supérieur 56 avec son symétrique par rapport au plan de symétrie.

Selon une variante de réalisation (non représentée) du balai 10, le profil du volet 56 et plus particulièrement le profil de la monture 14 est symétrique par rapport au plan longitudinal vertical médian.

Cela permet d'avoir un meilleur ajustement des embouts sur les extrémités 10a du balai 10.

Comme on l'a dit plus haut, les moyens de verrouillage comportent deux languettes 54 réparties symétriquement de part et d'autre du plan longitudinal vertical de symétrie.

Selon un mode de réalisation préféré, les languettes 54 sont réalisées dans les parois latérales 36 du logement longitudinal 32, de manière que leurs extrémités libres 54a sont mobiles transversalement lors de l'introduction de la vertèbre 16 dans le logement longitudinal 32.

De plus, comme on peut le voir à la figure 2, chaque extrémité 16a de la vertèbre 16 comporte une seule encoche 50. Ainsi, lorsque l'extrémité 16a de la vertèbre 16 est reçue dans le logement longitudinal 32, l'extrémité libre 54a de l'une des deux languettes 54 est reçue dans l'encoche 50, l'extrémité libre 54a de l'autre languette 54 s'appuie transversalement contre le bord associé de la vertèbre 16.

Pour favoriser la déformation transversale des languettes 54 vers l'extérieur lors de son insertion, l'extrémité 16a de la vertèbre 16 comporte deux chanfreins 58 formant des rampes, sur lesquels les extrémités 54a des languettes 54 s'appuient.

Selon une variante de réalisation des moyens de verrouillage (non représentée), les languettes 54 sont agencées dans la partie supérieure du logement longitudinal 32, par exemple au niveau du bord d'extrémité inférieure 38a de chaque nervure 38.

Ainsi, les extrémités libres 54a des languettes 54 sont mobiles verticalement lors de la déformation des languettes 54 entre une position basse de repos, lorsque la vertèbre 16 est absente, ou lorsque l'extrémité 54a de la languette 54 est reçue dans une encoche 50 de la vertèbre 16, et une position haute déformée, pour laquelle l'extrémité libre 54a de la languette 54 s'appuie sur la face supérieure de la vertèbre 16.

Selon un autre aspect de l'embout 26 selon l'invention, les moyens de verrouillage de l'extrémité 16a de la vertèbre 16 dans le logement longitudinal 32 sont débrayables, pour permettre le démontage de l'embout 26 d'avec l'extrémité 10a du balai 10.

Cela permet notamment de démonter la lame 18 hors de la monture 14, lorsque celle-ci est usée, pour la remplacer par une lame 18 neuve.

Pour cela, l'embout 26 est réalisé pour permettre le passage d'un outil, tel qu'un tournevis, en vue de provoquer une déformation de la languette 54 qui coopère avec une encoche, pour sortir l'extrémité libre 54a de la languette 54 hors de l'encoche 50. L'extrémité libre 16a de la vertèbre n'est alors plus bloquée par la languette 54, et elle peut alors sortir du logement longitudinal 32.

Comme on peut le voir aux figures 2 et 3, le logement longitudinal 32 est ouvert vers le bas, au niveau de chaque languette 54. Le fond 34 du logement longitudinal 32 comporte ainsi deux ouvertures 60 réparties symétriquement par rapport au plan longitudinal vertical médian, et chaque ouverture 60 est agencée au droit d'une languette 54.

De plus, pour que les crochets inférieurs 44 ne gênent pas l'accès aux languettes 54, les ouvertures 60 sont agencées transversalement de part et d'autre des crochets 44, comme on peut le voir aux figures 2 et 3.

Ainsi, selon l'invention et comme on peut le voir aux figures 1 et 2, le balai 10 comporte deux embouts d'extrémité 26 identiques qui sont montés sur chacune de ses extrémités 10a.

Le montage des embouts 26 selon l'invention ne nécessite pas d'aménagement particulier des autres composants du balai 10, notamment de la vertèbre 16, avec laquelle les embouts coopèrent pour leur verrouillage.

Ainsi, la vertèbre 16 comporte une encoche 50 à chacune de ses extrémités 16a, et les deux encoches sont réalisées dans le même bord latéral 52 de la vertèbre 16.

## Revendications

1. Embout (26) d'extrémité pour un balai (10) d'essuie-glace d'orientation principale longitudinale, ledit balai (10) comportant une vertèbre (16) de rigidification, une lame (18) d'essuyage, et une monture (14) de support de la vertèbre (16) et de la lame (18), chacune d'orientation longitudinale ; dans lequel,
- l'embout (26) est apte à être monté sur une extrémité longitudinale (10a) du balai (10),
- l'embout (26) comporte un logement longitudinal (32) ouvert en direction d'une première extrémité longitudinale de l'embout (26), dans lequel une extrémité longitudinale (16a) de la vertèbre (16) est apte à être reçue, le logement longitudinal (32) étant délimité par un fond inférieur horizontal (34) et deux parois latérales longitudinales verticales (36) qui s'étendent vers le haut depuis le fond inférieur (34),et dans lequel,
- l'embout comporte des languettes élastiques (54) pour verrouiller l'extrémité (16a) de la vertèbre (16) en position engagée dans le logement longitudinal (32), les languettes élastiques (54) étant réalisées de manière symétrique par rapport à un plan longitudinal vertical médian du logement longitudinal (32), **caractérisé en ce que**
- le fond (34) comporte deux ouvertures (60) réparties symétriquement par rapport au plan longitudinal vertical médian et chaque ouverture (60) est agencée au droit d'une languette (54), et **en ce que**
chaque languette (54) s'étend sensiblement longitudinalement vers l'avant et est recourbée vers l'intérieur du logement longitudinal (32) de manière à ce que l'extrémité avant libre (54a) de la languette soit apte à coopérer avec une encoche (50) réalisée dans un bord longitudinal (52) de l'extrémité (16a) de la vertèbre (16).

2. Embout (26) selon la revendication précédente, **caractérisé en ce qu'**il est réalisé de manière symétrique par rapport audit plan longitudinal vertical médian du logement longitudinal (32).

3. Embout (26) selon l'une quelconque des revendications précédentes, **caractérisé en ce que** les moyens de verrouillage comportent deux languettes (54) élastiques dont chacune est réalisée dans une paroi (36) du logement longitudinal (32), en s'étendant longitudinalement en direction de la deuxième extrémité longitudinale de l'embout (26), et dont l'extrémité longitudinale libre (54a) de chaque languette (54) est recourbée vers l'intérieur du logement longitudinal (32).

4. Embout (26) selon la revendication précédente, **caractérisé en ce que** l'extrémité libre (54a) de l'une des deux languettes (54) est apte à être reçue dans l'encoche (50) de l'extrémité longitudinale (16a) de la vertèbre (16), pour le verrouillage de la vertèbre (16) en position dans le logement longitudinal (32).

5. Embout (26) selon l'une quelconque des revendications précédentes, **caractérisé en ce que** les moyens de verrouillage (54) sont débrayables, pour permettre un démontage de l'embout (26) d'avec l'extrémité longitudinale (10a) du balai (10).

6. Embout (26) selon la revendication précédente, en combinaison avec la revendication 3 ou 4, **caractérisé en ce que** le logement longitudinal (32) est ouvert vers le bas au niveau de chaque languette (54) élastique pour permettre le passage d'un outil apte à provoquer une déformation des languettes (54).

7. Embout (26) selon l'une quelconque des revendications précédentes, **caractérisé en ce qu'**il comporte deux crochets (44) inférieurs répartis symétriquement par rapport audit plan longitudinal vertical de symétrie, qui s'étendent vers le bas depuis un fond (34) du logement longitudinal (32), et qui délimitent un conduit longitudinal apte à recevoir un dos supérieur de la lame (18) d'essuyage.

8. Embout (26) selon la revendication précédente, **caractérisé en ce que** la deuxième extrémité longitudinale de l'embout (26) comporte une paroi verticale transversale (48) qui obture l'extrémité associée du conduit longitudinal (32).

9. Embout (26) selon l'une quelconque des revendications précédentes, **caractérisé en ce qu'**il comporte un corps creux (28) dans lequel le logement longitudinal (32) est réalisé, et qui comporte un logement (30) qui prolonge le logement longitudinal (32) vers la première extrémité de l'embout (26) et dans lequel une extrémité longitudinale (14a) de la monture (14) est apte à être reçue.

10. Balai (10) d'essuie-glace comportant une monture (14) de support, une vertèbre (16) de rigidification, et une lame (18) d'essuyage, **caractérisé en ce que** au moins une extrémité (10a) du balai (10) porte un embout (26) selon l'une quelconque des revendications précédentes.

11. Balai (10) selon la revendication précédente **caractérisé en ce que** chaque extrémité longitudinale (16a) de la vertèbre (16) comporte une encoche (50) et **en ce que** les encoches (50) sont toutes les deux agencées transversalement d'un même coté par rapport à un plan longitudinal vertical médian de la vertèbre (16).

## Patentansprüche

1. Endansatz (26) für ein Scheibenwischerblatt (10) mit Längshauptrichtung, wobei das Scheibenwischerblatt (10) einen Versteifungswirbel (16), ein Wischelement (18) und ein Traggestell (14) des Wirbels (16) und des Wischelements (18) jeweils mit Längsausrichtung aufweist, bei dem
- der Ansatz (26) geeignet ist, um auf ein Längsende (10a) des Scheibenwischerblatts (10) montiert zu werden,
- der Ansatz (26) eine Längsaufnahme (32) aufweist, die in Richtung eines ersten Längsendes des Ansatzes (26) offen ist, in der ein Längsende (16a) des Wirbels (16) aufgenommen werden kann, wobei die Längsaufnahme (32) durch einen horizontalen unteren Boden (34) und zwei vertikale Längsseitenwänden (36), die sich von dem unteren Boden (34) nach oben erstrecken, abgegrenzt ist, und bei dem
- der Ansatz elastische Laschen (54) zum Verriegeln des Endes (16a) des Wirbels (16) in der in die Längsaufnahme (32) eingefügten Position aufweist, wobei die elastischen Laschen (54) symmetrisch in Bezug auf eine vertikale mittlere Längsebene der Längsaufnahme (32) hergestellt sind, **dadurch gekennzeichnet, dass**
- der Boden (34) zwei Öffnungen (60) aufweist, die symmetrisch in Bezug auf die mittlere vertikale Längsebene verteilt sind und jede Öffnung (60) im rechten Winkel zu einer Lasche (54) eingerichtet ist, und dass
sich jede Lasche (54) im Wesentlichen längs nach vorn erstreckt und zum Inneren der Längsaufnahme (32) derart zurückgebogen ist, dass das freie vordere Ende (54a) der Lasche geeignet ist, mit einer Kerbe (50), die in einem Längsrand (52) des Endes (16a) des Wirbels (16) hergestellt ist, zusammenzuwirken.

2. Ansatz (26) nach dem vorhergehenden Anspruch, **dadurch gekennzeichnet, dass** er symmetrisch in Bezug auf die mittlere vertikale Längsebene der Längsaufnahme (32) hergestellt ist.

3. Ansatz (26) nach einem der vorhergehenden Ansprüche, **dadurch gekennzeichnet, dass** die Verriegelungsmittel zwei elastische Laschen (54) aufweisen, die jeweils in einer Wand (36) der Längsaufnahme (32) hergestellt sind, indem sie sich längs in Richtung des zweiten Längsendes des Ansatzes (26) erstrecken, und wobei das freie Längsende (54a) jeder Lasche (54) zum Inneren der Längsaufnahme (32) zurückgebogen ist.

4. Ansatz (26) nach dem vorhergehenden Anspruch, **dadurch gekennzeichnet, dass** das freie Ende (54a) einer der zwei Laschen (54) geeignet ist, in der Kerbe (50) des Längsendes (16a) des Wirbels (16) zum Verriegeln des Wirbels (16) in Position in der Längsaufnahme (32) aufgenommen zu werden.

5. Ansatz (26) nach einem der vorhergehenden Ansprüche, **dadurch gekennzeichnet, dass** die Verriegelungsmittel (54) ausgekoppelt werden können, um eine Demontage des Ansatzes (26) von dem Längsende (10a) des Scheibenwischerblatts (10) zu erlauben.

6. Ansatz (26) nach dem vorhergehenden Anspruch, kombiniert mit dem Anspruch 3 oder 4, **dadurch gekennzeichnet, dass** die Längsaufnahme (32) im Bereich jeder elastischen Lasche (54) nach unten offen ist, um das Durchgehen eines Werkzeugs zu erlauben, das geeignet ist, um eine Verformung der Laschen (54) zu bewirken.

7. Ansatz (26) nach einem der vorhergehenden Ansprüche, **dadurch gekennzeichnet, dass** er zwei untere Haken (44) aufweist, die symmetrisch in Bezug auf die vertikale Symmetrielängsebene verteilt sind, die sich von einem Boden (34) der Längsaufnahme (32) nach unten erstrecken und eine Längsleitung abgrenzen, die geeignet ist, um einen oberen Rücken des Wischelements (18) aufzunehmen.

8. Ansatz (26) nach dem vorhergehenden Anspruch, **dadurch gekennzeichnet, dass** das zweite Längsende des Ansatzes (26) eine vertikale Querwand (48) aufweist, die das zu der Längsleitung (32) gehörende Ende verschließt.

9. Ansatz (26) nach einem der vorhergehenden Ansprüche, **dadurch gekennzeichnet, dass** er einen Hohlkörper (28) aufweist, in dem die Längsaufnahme (32) hergestellt ist, und der eine Aufnahme (30) aufweist, die die Längsaufnahme (32) zu dem ersten Ende des Ansatzes (26) verlängert, und in der ein Längsende (14a) des Gestells (14) aufgenommen werden kann.

10. Scheibenwischerblatt (10), das ein Traggestell (14), einen Versteifungswirbel (16) und ein Wischelement (18) aufweist, **dadurch gekennzeichnet, dass** mindestens ein Ende (10a) des Scheibenwischerblatts (10) einen Ansatz (26) nach einem der vorhergehenden Ansprüche aufweist.

11. Scheibenwischerblatt (10) nach dem vorhergehenden Anspruch, **dadurch gekennzeichnet, dass** jedes Längsende (16a) des Wirbels (16) eine Kerbe (50) aufweist, und dass beide Kerben (50) quer auf derselben Seite in Bezug auf eine mittlere vertikale Längsebene des Wirbels (16) eingerichtet sind.

## Claims

1. End fitting (26) for a windscreen wiper (10) of longitudinal main orientation, said wiper (10) including a stiffener vertebra (16), a wiper blade (18), and a mount (14) to support the vertebra (16) and the blade (18), each of longitudinal orientation; wherein,
- the fitting (26) is adapted to be mounted at one longitudinal end (10a) of the wiper (10),
- the fitting (26) includes a longitudinal housing (32) open in the direction of a first longitudinal end of the fitting (26) in which a longitudinal end (16a) of the vertebra (16) is adapted to be received, the longitudinal housing (32) being delimited by a horizontal bottom (34) and two vertical longitudinal lateral walls (36) that extend upward from the bottom (34), and wherein,
- the fitting includes elastic tongues (54) for locking the ends (16a) of the vertebra (16) in the position engaged in the longitudinal housing (32), the elastic tongues (54) being symmetrical with respect to a median vertical longitudinal plane of the longitudinal housing (32), **characterized in that**
- the bottom (34) includes two openings (60) symmetrically distributed with respect to the median vertical longitudinal plane and each opening (60) is in line with a tongue (54), and **in that**
each tongue (54) extends substantially longitudinally toward the front and is curved toward the interior of the longitudinal housing (32) so that the free front end (54a) of the tongue is able to cooperate with a notch (50) in a longitudinal edge (52) of the end (16a) of the vertebra (16).

2. Fitting (26) according to the preceding claim, **characterized in that** it is symmetrical with respect to said median vertical longitudinal plane of the longitudinal housing (32).

3. Fitting (26) according to either one of the preceding claims, **characterized in that** the locking means include two elastic tongues (54) each of which is formed in a wall (36) of the longitudinal housing (32), extending longitudinally in the direction of the second longitudinal end of the fitting (26), and the free longitudinal end (54a) of each tongue (54) of which is curved toward the interior of the longitudinal housing (32) .

4. Fitting (26) according to the preceding claim, **characterized in that in that** the free end (54a) of one of the two tongues (54) is adapted to be received in the notch (50) at the longitudinal end (16a) of the vertebra (16) to lock the vertebra (16) in position in the longitudinal housing (32).

5. Fitting (26) according to any one of the preceding claims, **characterized in that** the locking means (54) can be disengaged to enable demounting of the fitting (26) from the longitudinal end (10a) of the wiper (10).

6. Fitting (26) according to the preceding claim, in combination with claim 3 or 4, **characterized in that** the longitudinal housing (32) is open downward at the location of each elastic tongue (54) to allow the passage of a tool for deforming the tongues (54).

7. Fitting (26) according to any one of the preceding claims, **characterized in that** it includes at the bottom two hooks (44) symmetrically distributed with respect to said vertical longitudinal plane of symmetry that extend downward from a bottom (34) of the longitudinal housing (32) and delimit a longitudinal conduit adapted to receive a back at the top of the wiper blade (18).

8. Fitting (26) according to the preceding claim, **characterized in that** the second longitudinal end of the fitting (26) includes a transverse vertical wall (48) that blocks the associated end of the longitudinal conduit (32).

9. Fitting (26) according to any one of the preceding claims, **characterized in that** it includes a hollow body (28) in which the longitudinal housing (32) is produced, and which includes a housing (30) that extends the longitudinal housing (32) toward the first end of the fitting (26) and in which a longitudinal end (14a) of the mount (14) is adapted to be received.

10. Windscreen wiper (10) including a support mount (14), a stiffener vertebra (16), and a wiper blade (18), **characterized in that** at least one end (10a) of the wiper (10) carries a fitting (26) according to any one of the preceding claims.

11. Wiper (10) according to the preceding claim **characterized in that** each longitudinal end (16a) of the vertebra (16) includes a notch (50) and **in that** both notches (50) are arranged transversely on the same side of a median vertical longitudinal plane of the vertebra (16).
